# EUROPÄISCHE PATENTSCHRIFT

(11) **EP 0 606 438 B1**
(45) Veröffentlichungstag und Bekanntmachung des Hinweises auf die Patenterteilung: **10.12.1997**
(21) Anmeldenummer: 93915760.8
(22) Anmeldetag: 01.07.1993
(51) Int. Cl.: H02G 1/12

(54) **VORRICHTUNG ZUR ABISOLIERUNG ELEKTRISCHER LEITER UND/ODER LEITUNGEN**
DEVICE FOR STRIPPING ELECTRIC CONDUCTORS AND/OR WIRES
DISPOSITIF SERVANT A DENUDER DES CONDUCTEURS ET/OU DES FILS ELECTRIQUES

(30) Priorität: 02.07.1992 DE 4221500
(43) Veröffentlichungstag der Anmeldung: 20.07.1994
(73) Patentinhaber: Krampe, Franz, D-59387 Ascheberg (DE)
(72) Erfinder: Krampe, Franz, D-59387 Ascheberg (DE)
(74) Vertreter: Hoffmeister, Helmut, Dr. Dipl.-Phys.
(86) Internationale Anmeldenummer: EP9301695
(87) Internationale Veröffentlichungsnummer: WO9401906

(56) Entgegenhaltungen:
- GB-A- 792 055
- US-A- 3 125 908

## Beschreibung

Die Erfindung betrifft eine Vorrichtung zur Abisolierung elektrischer Leiter und/oder Leitungen, bestehend aus wenigstens zwei als Abisoliergerät ausgebildeten Schenkeln,
- die an ihrem einen Ende wenigstens eine Drehachse aufweisen, mit der die Schenkel schließbar sind, und
- die wenigstens im Bereich ihrer anderen Enden wenigstens ein Schneidwerkzeugteil aufweisen.

Eine Vorrichtung zur Abisolierung elektrischer Leiter und/oder Leitungen ist aus der DD-A-248 003 bekannt. Hier stehen sich zwei Schenkel gegenüber, die an ihrem vorderen Ende Schneidwerkzeugteile aufweisen und an ihrem hinteren Ende über eine Drehachse schließbar sind. Mit der Drehachse ist ein dritter Schenkel verbunden, der über einen Winkelhebel mit dem vorderen Schenkel und den Schneidwerkzeugteilen verbunden ist.

Wird nun der dritte Schenkel betätigt, drücken die Schneidwerkzeugteile zusammen und durchtrennen die Isolation. Bei einem zweiten Zusammendrücken werden die Schneidwerkzeugteile durch den Winkelhebel nach hinten gezogen. Vor den Schneidwerkzeugteilen angeordnete Klemmbacken halten den Leiter fest. Durch die doppelte Ausübung des Schneidvorganges mit anschließendem Trennen kann es durch den unterschiedlichen Druck beim Abziehen der Isolation zu einer Beschädigung des Leiters kommen. Darüber hinaus können die als Schermesser ausgebildeten Schneidwerkzeugteile Leiter größeren Querschnitts so stark beschädigen, daß der Leiter entweder anschließend bei der Verarbeitung bricht oder beim Abisolieren vollkommen durchtrennt wird. Nachteilig ist darüber hinaus, daß es durch die drei übereinanderliegenden Schenkel mit dem dazwischenliegenden Winkelhebel zum Einklemmen der Finger kommen kann.

Bekannt ist aus der DE-B-3 632 685 eine Vorrichtung zur Abisolierung elektrischer Leiter und/oder Leitungen. Sie besteht aus zwei Schenkelpaaren, die sich um eine Drehachse bewegen. Das kürzere Schenkelpaar ist als Kabelschneider ausgebildet. Mit Hilfe der längeren Schenkelpaare dieser Zange, die dann die Funktionen von Handgriffen übernehmen, sind Leiter und Leitungen auf bestimmte Länge schneidbar. Die längeren Schenkel können darüber hinaus als Abisoliergerät benutzt werden. Eine Sperre verhindert dabei das unbeabsichtigte Aufklappen beider Betätigungsschenkel.

Auch wenn durch das Anbringen von Schneidwerkzeugteilen an den Innenseiten der Betätigungsschenkel Leiter und Leitungen abisolierbar sind, ist dieser Vorgang im wesentlichen auf das Durchtrennen der Isolierung runder Leiter bzw. Leitungen begrenzt. Beim anschließenden Abziehen der Isolation ist der auf der Gegenseite liegende Kabelschneider teilweise hinterlegt. Kommt es darüber hinaus zu einem ungewollten Öffnen der Schenkelpaare, besteht durch die jetzt offenliegenden Schneidwerkzeugteile eine mögliche Verletzungsgefahr.

Der Erfindung liegt die Aufgabe zugrunde, die eingangs genannte Vorrichtung zur Abisolierung elektrischer Leiter bzw. Leitungen so weiterzuentwickeln, daß sie einfach und sicher Leiter bzw. Leitungen unterschiedlichen Querschnitts abisoliert.

Erfindungsgemäß wird die Aufgabe dadurch gelöst, daß
- die Drehachse eine Doppeldrehachse ist, deren erstes im wesentlichen zylinderförmig ausgebildetes Bolzenelement im ersten Schenkel und deren zweites im wesentlichen zylinderförmig ausgebildetes Bolzenelement im zweiten Schenkel angeordnet ist, und
- beide Bolzenelemente in einem Zwischenelement gehalten und geführt sind, wodurch mit einem derart ausgebildeten Drehschiebegelenk beide Schenkel mit ihren Schneidwerkzeugteilen pinzettenartig gehalten und bei Betätigen mit an ihnen angeordneten Führungselementen aufeinander preß- und in eine Richtung gegeneinander verschiebbar sind.

Die mit der Erfindung erzielten Vorteile bestehen insbesondere darin, daß durch die pinzettenartig zueinander liegenden Schenkel ein sicheres und gefahrloses Ergreifen des jeweiligen Leiters bzw. der Leitung möglich ist.

Dabei soll im folgenden unter
- Leiter ein mit einer Isolierung umgebener leitfähiger Einzel- oder Mehrfachdraht aus Kupfer, Aluminium oder dergleichen und unter
- Leitung eine oder mehrere von einer Ummantelung aus einem Isolierstoff, z. B. Kunststoff, Gummi, Spezialpapier oder dergleichen umschlossener Leiter
verstanden werden.

Da Kabel und Leitungen im wesentlichen den gleichen Aufbau aufweisen, ist die beschriebene Abisoliervorrichtung ebenso für Kabel einsetzbar. Nach dem Ergreifen der Leitung kann die Ummantelung durchtrennt und abgezogen werden. Auch bei den nun freiliegenden Einzelleitern ist eine sichere Durchtrennung der Isolation möglich. Durch die Doppellagerung der Drehachse geht die Greifbewegung in eine Scherbewegung über, so daß bei einem Zusammendrücken beider Schenkel die Isolation des Leiters durchtrennt und anschließend abgeschoben wird.

In weiterer Ausgestaltung der Erfindung sind gegenüber dem Drehschiebegelenk außer den Schneidwerkzeugen eines bekannten Leiterabisolierwerkzeuges und/oder eines Abmantelungswerkzeuges für Rundleitungen ∟-förmig ausgebildete, in Schenkelrichtung und um 180° gegeneinander versetzt in Verschiebungsrichtung angeordnete Schneidwerkzeuge eines Abisolierwerkzeuges für Flachleiter bzw. -leitungen und/oder Greiferbacken an den Innenseiten der Schenkel anbringbar.

Diese Anordnungsmöglichkeit bekannter und neuer Werkzeuge schafft eine universell verwendbare Abisoliervorrichtung. Durch die Anordnung der Greiferbacken vor den Schneidwerkzeugen des Leiterabisolierwerkzeuges wird durch die mögliche Doppelbewegung der Schenkel ein einfaches und leichtes Abisolieren gesichert. Besonders vorteilhaft einsetzbar sind die um 180° versetzt angeordneten ∟-förmigen Schneidwerkzeuge für Flachleiter geeignet. Denn durch das Drücken und das Verschieben der in Längsrichtung der Schenkel angeordneten Schneidwerkzeuge wird die Isolation des Flachleiters oben und vor allen an den Seiten durchtrennt. Danach kann die so rundum durchschnittene Isolation abgezogen werden.

Vorteilhaft ist es, daß an der Doppellagerung der Drehachse eine an einem der Schenkel hakenförmige Verlängerung angeordnet ist, von der mit der Verschiebungsbewegung ein Messerteil weg und wieder heranführbar ist.

Durch das verdeckte Messerteil kann eine Außenisolation sachgerecht durchtrennt und abgezogen werden. Vor allem das Freilegen des Messers erst bei Verschieben der Schenkel schützt vor ungewollter Verletzung durch dieses Messer. Das Eindrücken der Leitung in die hakenförmige Verlängerung und das gezielte Andrücken des Messers an die Isolation ermöglicht eine einwandfreie Funktion dieser Spezialschneideinrichtung.

Vorteilhaft ist dabei, daß das Drehschiebegelenk mit einem Rückholelement, z.B. einer Feder und einem Rückholbegrenzungselement, die an wenigstens einem der Schenkel angeordnet sind, versehen ist.

So ist sichergestellt, daß beide Schenkel nach einer Betätigung selbstständig immer in die gleiche Ausgangslage und damit Betätigungsstellung zurückgehen.

Vorteilhaft ist, daß das Drehschiebegelenk als Doppelgelenk ausgebildet ist, bei dem beide Schenkel miteinander durch ein Zwischenelement verbunden sind, das in jeden Schenkel drehbar gelagert ist.

Das Zwischenelement hält dabei beide Schenkel zusammen. Beim Betätigen wird zuerst ein erstes Lager und danach ein zweites Lager in den Schenkeln bewegt, so daß eine Schneid- in eine Schiebebewegung übergehen kann.

Möglich ist es auch, die Doppellagerung der Drehachse als ein in wenigstens einem Langloch, das in oder zwischen den Schenkeln angeordnet ist, bewegliches Gleitelement ausgebildet ist.

Das Gleitelement kann dabei aus einem durchgehenden und aus zwei Teil-Bolzen oder zwei Kugellagerungen bestehen, die über einen Zwischensteg in den Langlöchern über eine mehrstufige Feder bewegbar sind.

Ein solches Lösungsprinzip ist aus der DE-B-3 241 530 ausführlich beschrieben. Die Übertragung dieses Lösungsprinzips, bei der ein gemeinsamer Dreh- und Schiebepunkt durch das in Langlöchern bewegliche Gleitelement zuerst die Greif- und danach die Schiebebewegung realisiert, stellt eine weitere mögliche Form der Umsetzung einer Doppellagerung dar und ist somit eine vorteilhafte Integrierung des Langlochsprinzips in eine nach dem Pinzettenprinzip arbeitende Abisoliervorrichtung.

In weiterer Ausgestaltung ist das Führungselement zugleich ein Anschlagelement für die in das Leiterabisolierwerkzeug und die Greiferbacken einzuführende Leitung.

Durch diese Doppelfunktion bewirkt das Führungselement, daß bei allen abzuisolierenden Leitern die Isolation immer auf die gleiche Länge abgezogen wird. Das hat zur Folge, daß die Klemmverbindungen bei einer Installation ein einheitliches Aussehen haben und eine sachgerechte Ausführung ermöglichen.

Vorteilhaft ist es, wenn das Führungselement als wenigstens ein in wenigstens einer länglichen Ausnehmung verschiebbarer Zapfen, der in der Innenseite einer der Schenkel ein- oder angebracht, ausgebildet ist.

Dadurch ist gesichert, daß beide Schenkel immer parallel zueinander bewegbar sind und ein Verkanten der Schneidwerkezuge und der Greiferbacken beim Abisolieren vermieden wird.

Dieser vorteilhafte Effekt ist auch dadurch erreichbar, indem das Führungselement als ein Hebelgelenk, das gelenkig mit einem der Schenkel verbunden und in einer Nut des anderen geführt ist, ausgebildet ist. Dadurch werden beide Schenkel nicht nur geführt, sondern auch die zum Abisolieren notwendige Kraft gezielt verstärkt.

Diese Verstärkung kann dadurch erwirkt werden, wenn in vorteilhafter Weise ein über einem Gelenk des Hebegelenks angeordneter Hebel eine gekrümmte Fläche aufweist, die bei der Verschiebungsbewegung beider Schenkel mit einem in der Nut angeordneten Rollenzylinder kraftschlüssig in Verbindung kommt. Vorallem das Entlanggleiten der gekrümmten Fläche am Rollenzylinder verstärkt sowohl Schneid- und Schiebebewegung. Je nachdem, wie diese Krümmung ausgelegt ist, können beide Bewegungen unterschiedlich und/oder kontinuierlich gezielt unterstützt werden.

Eine Kraftverstärkung der für das Abisolieren notwendigen Bewegung kann auch dadurch erreicht werden, wenn vorteilhaft ein in der Nut gehaltener τ-förmig ausgebildeter Hebel mit seinem im wesentlichen geraden Teil unter einen in einer Öse drehbar gelagerten Zylinderbolzen kraftschlüssig eingreift, wobei der Hebel und die Öse in einem der Schenkel angeordnet ist. Durch das gerade Teil des τ-förmigen Hebels werden beim Untergreifen unter den drehbar gelagerten Zylinderbolzen Schneid- und Schiebebewegung gleichfalls gezielt unterstützt, wobei die Neigung des geraden Teils die Stärke der Kraft mitbestimmt. Wie auch die vorherige Kraftverstärkungseinrichtung eignet sich diese besonders vorteilhaft für das Abisolieren Leiter größeren Querschnittes.

Vorteilhaft ist es, wenn das Zwischenteil in einem Winkel zwischen 30 und 90° zu einem der Schenkel angeordnet ist. Durch diese Neigung des Zwischenteils kommt es gleichfalls zu einer Verstärkung der Kräfte für die einzelnen Bewegungen. Vor allem ein schräg stehendes Zwischenteil verstärkt die Schiebebewegung.

Vorteilhaft ist das Rückholbegrenzungselement als ein
- in Schlitzausnehmungen eines der Schenkel laufender Zylinderbolzen, der von einem Ausleger gehalten ist, der in der Nähe einer der Lagerpunkte angeordnet ist,
- als eine feststehende Rückwand in einem der Lagerpunkte und/oder
- als ein an einem der Schenkel angeordneter verstellbarer Anschlag
ausgebildet. Die jeweils ausgebildete Begrenzung sorgt mit dafür, daß beide Schenkel immer in einem sicheren und festen Arbeitsstand zueinander gelagert sind.

Vorteilhaft ist das Messerteil an einem Kolbenblock angeordnet, der mit einem Ausleger verbunden ist, und der durch einen Stift eines der Lager in einem Schlitz des Kolbenblocks geführt ist. Hierdurch wird ein einwandfreier Gebrauch des Messerteils in Zusammenwirkung mit der hakenförmigen Verlängerung gesichert und zugleich eine Ausführungsform der Rückholbegrenzung realisiert.

Vorteilhaft ist es, wenn wenigstens einer der Schenkel an seiner Außenseite mit einer Grifferhebung versehen ist, die einander gegenüber oder versetzt zueinander liegen. Hierdurch wird der Gebrauch der Abisoliervorrichtung durch eine besondere Griffigkeit erleichtert.

In der Zeichnung sind Ausführungsbeispiele dargestellt, die im folgenden näher beschrieben werden. Es zeigen:
- Figur 1a: ein Abisoliergerät für Leiter sowie Rund- und Flachleitungen in schematischer, perspektivischer Darstellung,
- Figur 1b: ein Abisoliergerät gemäß Figur 1a in aufgeklappter und geschnittener schematischer Darstellung,
- Figur 1c: ein Abisoliergerät gemäß Figur 1a in einer schematischen Vorderansicht,
- Figur 2a: ein Abisoliergerät für Leiter und Rundleiter in schematischer, perspektivischer Darstellung,
- Figur 2b: ein Abisoliergerät gemäß Figur 2a in aufgeklappter und geschnittener schematischer Darstellung,
- Figur 2c: ein Abisoliergerät gemäß Figur 2a in einer um 180° gedrehten schematischen Vorderansicht,
- Figur 3a: ein Abisoliergerät für Leiter größeren Querschnitts in schematischer, perspektivischer Darstellung,
- Figur 3b: ein Abisoliergerät gemäß Figur 3a in aufgeklappter und geschnittener schematischer Darstellung,
- Figur 3c: ein Abisoliergerät gemäß Figur 3a in schematischer Vorderansicht,
- Figur 4a: eine weitere Ausführungsform eines Abisoliergerätes für Leiter größeren Querschnitts in schematischer, perspektivischer Darstellung,
- Figur 4b: ein Abisoliergerät gemäß Figur 4a in aufgeklappter und geschnittener schematischer Darstellung.
- Figur 4c: ein Abisoliergerät gemäß Figur 4a in schematischer Vorderansicht,
- Figur 5: eine weitere Ausführungsform eines Drehschiebegelenkes im eingebauten Zustand in einem schematisch dargestellten Teilabschnitt eines Absisoliergerätes,
- Figur 6: eine weitere Ausführungsform eines Drehschiebegelenkes in einer schematischen perspektivischen Einzeldarstellung.

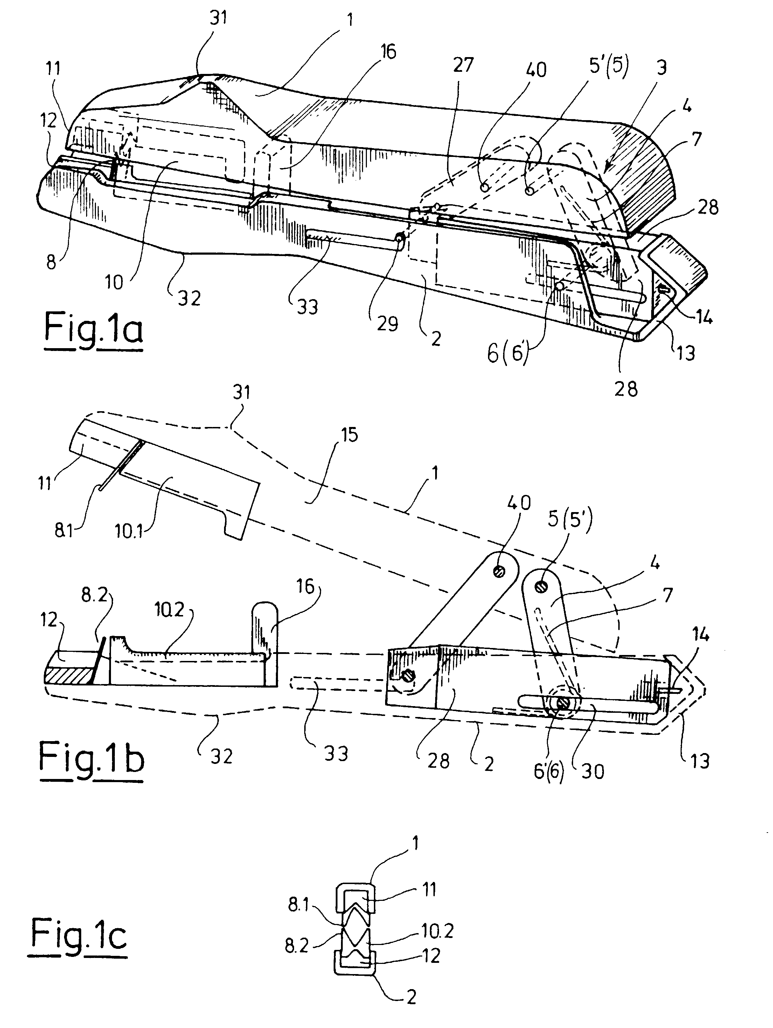

Ein Abisoliergerät für Leiter sowie Rund- und Flachleiter ist in den Figuren 1a bis 1c dargestellt.

Es zeichnet sich, wie Figur 1a besonders deutlich zeigt, durch pinzettenartig im wesentlichen parallel gegenüberliegende Schenkel 1 und 2 mit einem dazwischen liegenden Doppelgelenk 3 aus. Das Doppelgelenk 3 besteht aus einem Zwischenteil 4, das im oberen Schenkel 1 in einem Lager 5 mit einem im wesentlichen zylinderförmigen Bolzenelement 5' und im unteren Schenkel 2 in einem weiteren Lager 6 mit einem weiteren im wesentlichen zylinderförmigen Bolzenelement 6' gehalten wird. Das Zwischenteil ist vierkantförmig, kann aber auch rund oder oval ausgebildet sein. In das oder in eine der Außenflächen des Zwischenteils 4 ist eine Feder 7 eingelassen, die in der Nähe des Lagers 6 z. B. an einer Innenseite des unteren Schenkels 2 gehalten sein kann.

Der untere Schenkel 2 ist an diesem Ende als hakenförmige Verlängerung 13 weitergeführt. An eine obere und eine der Innenkanten der Verlängerung 13 stößt ein Kolbenblock 28. Der Kolbenblock 28 ist ebenfalls vierkantförmig ausgebildet, kann aber auch eine andere Form haben. In den Kolbenblock 28 ist ein Schlitz 30 eingebracht. Durch diesen Schlitz 30 geht, wie auch Figur 1b verdeutlicht, der Bolzen 6' des unteren Lagers 6. An dem dem Messerteil 14 entgegengesetzten Ende des Kolbenblocks 28 ist an einem Stift 29 ein Ausleger 27 befestigt. Der Stift selbst ist in wenigstens einem Schlitz 33, der die Form eines liegenden "1" hat geführt. Der Ausleger 27 ist im oberen Schenkel 1 durch ein durchgehendes Lager 40 gehalten. Der Ausleger 27 selbst hat gleichfalls eine vierkantförmige Form, wobei auch eine andere Form möglich ist. Die vierkantförmige Form des Zwischenstücks 4, des Auslegers 27 und des Kolbenblocks 28 bringt aber den Vorteil, daß zum einen alle drei Elemente in U-förmig ausgebildeten Hohlschenkelabschnitten der Schenkel 1 und 2 ohne gegenseitige Behinderung bewegbar sind und zum anderen beim Betätigen der Schenkel 1 und 2 eine gegenseitige Führung gegeben ist. Der jeweilige U-förmige Hohlschenkelabschnitt reicht etwa bis zur halben Länge des Schenkels 1 bzw. 2. In diesem Bereich ist im unteren Schenkel 2 ein Zapfen 16 angeordnet, zu dem im oberen Schenkel 1 eine kompatible Nut 15 eingebracht ist.

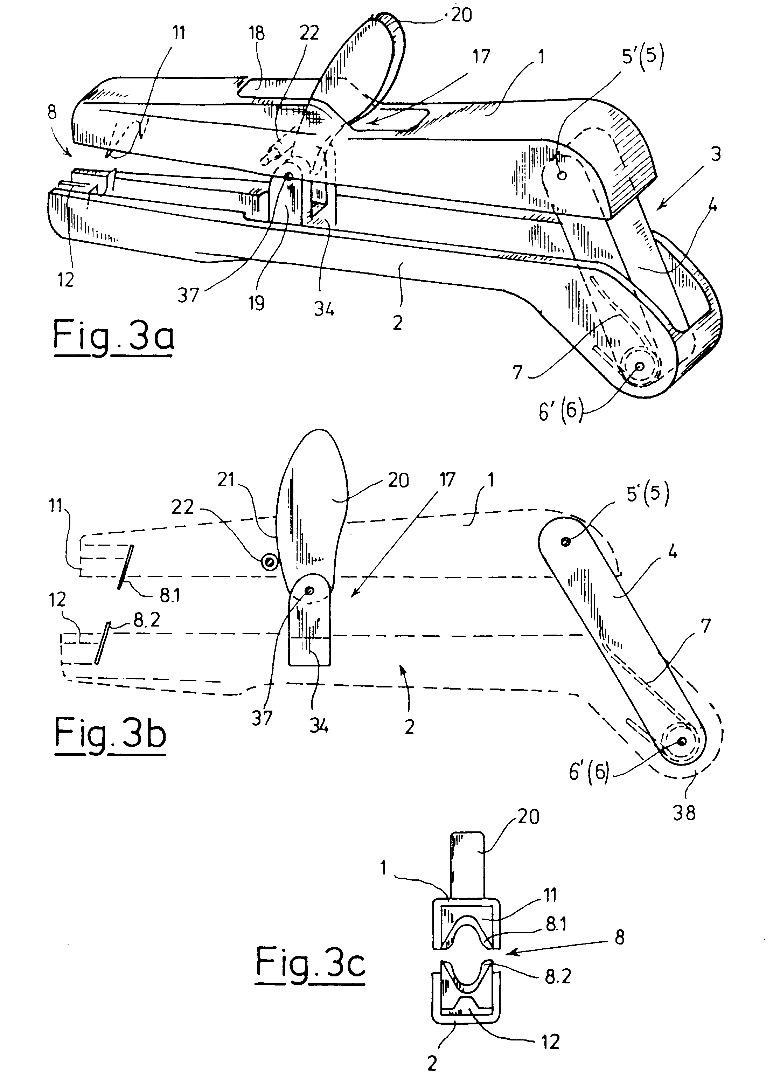

Am vorderen Ende beider Schenkel 1 und 2 ist ein Leiterabisolierwerkzeug 8 angeordnet. Dessen eine Schneide 8.1 ist am oberen Schenkel 1 und dessen andere Schneide 8.2 am unteren Schenkel 2 befestigt. Beide Schneiden 8.1 und 8.2 sind leicht nach vorn geneigt. Sie sind, wie auch Figur 3b besonders deutlich zeigt, von außen nach innen heruntergezogen in Gestalt eines offenen Dreiecks mit gegeneinanderliegenden Spitzen ausgebildet. Vor der Schneide 8.1 ist eine ähnlich ausgebildete längliche Greiferbacke 11 angeordnet, vor dem Schenkel 8.2 eine weitere Greiferbacke 12, die in ihrer Formgebung zur Greiferbacke 11 in etwa kompatibel ist.

Zwischen dem Zapfen 16 und der Schneide 8.2 ist ∟-förmige Schneide 10.2 eines Abmantelungswerkzeuges für Flachleiter bzw. -leitungen angeordnet. Eine weitere Schneide 10.1 dieses Werkzeuges ist gegenüberliegend am oberen Schenkel hinter der Schneide 8.1 befestigt. Sie ist um 180° gedreht und damit ¬-förmig ausgebildet.

Für eine Erleichterung der Betätigung sind beide Schenkel 1 und 2 mit jeweils einer Grifferhebung 31 und 32 versehen. Beide Grifferhebungen 31 und 32 liegen, wie die Figur 1a zeigt, in etwa gegenüber. Sie können aber auch versetzt zueinander angeordnet sein. Vor der Grifferhebung 31 und hinter der Grifferhebung 32 entstehen dadurch zusätzliche Griffmulden.

Wird nun vorn in das Leiterabisolierwerkzeug 8 ein Leiter geschoben, stößt er am Zapfen 16 an. Durch das Zusammendrücken der Schenkel 1 und 2 greifen die Schneiden 8.1 und 8.2 in die Isolation des Leiters und durchtrennen sie. Bei diesem Zusammendrücken neigt sich der obere Schenkel 1 auf den unten liegenden Schenkel 2 und schiebt den Stift 29 aus seiner Ruhelage in der Schlitzausnehmung 33. Werden beide Schenkel 1 und 2 dann stärker zusammengedrückt, geht die Schneid- und Greifbewegung durch das Doppelgelenk 3 in eine Schiebebewegung über. Gefördert wird diese Schiebebewegung durch den in der Schlitzausnehmung 33 gleitenden Stift 29 und das etwas nach vorn geneigte Zwischenteil 4, das durch die Lager 5 und 6 eine noch schrägere Lage einnimmt. Bei diesem Schiebevorgang verschiebt sie auch die Greiferbacke 11 über der Greiferbacke 12 und zieht unter Zuhilfenahme beider Schneiden 8.1 und 8.2 die durchtrennte Isolation ab, so daß der blanke Leiter bzw. blanke Leiterbündel für eine weitere Installation zur Verfügung steht.

Soll der Mantel einer Rundleitung abisoliert werden, werden wie bereits beschrieben, beide Schenkel 1 und 2 gegeneinander verschoben. Der Kolbenblock 28, an dem das Messerteil 14 angeordnet ist und der mit dem Ausleger 27 verbunden ist, wird durch das Bolzenelement 6' des Lagers 6 in den Schlitz 30 des Kolbenblocks geführt. In die nun geöffnete hakenförmige Verlängerung 13 wird quer zur Schenkelachse ein Rundleiter gelagert und durch Lockerung des Griffes das Messerteil 14 an den Mantel herangeführt. Mit einer Drehung um den Mantel wird dieser durchschnitten und kann dann danach abgezogen werden.

Soll ein Flachleiter abisoliert werden, wird dieser ebenfalls quer zur Schenkelachse in das Werkzeug 10 zwischen beide Schenkel 1 und 2 gelegt. Beim Zusammendrücken wird die Isolation auf den Flachseiten des Leiters bzw. die Leitung durchtrennt. Beim Übergang in die Schiebebewegung beider Schenkel 1 und 2 greifen die seitwärts liegenden Messerklingen der Schneiden 10.1 und 10.2 in die schmalen Seiten der Flachleiterisolation ein. Bei diesem Schneidvorgang ist gewährleistet, daß durch die speziell ausgebildeten Schneiden 10.1 und 10.2 verbunden mit einer vom Aneinanderdrücken in ein Übereinanderschieben übergehende Bewegung beider Schenkel 1 und 2 eine "zweidimensionale Schneidbewegung" vollzogen wird. Dadurch wird ein gleichmäßiges Rundumtrennen dieser für ein Abisolieren komplizierten Leiter bzw. Leitungsform ermöglicht.

Von besonderem Vorteil ist, daß der Bedienende auch durch die Wahl des Druckes und der Bewegung seiner Hand mit dem Zwischenteil 4 Andrück- und Schiebebewegung oder Schiebe- und Andrückbewegung einzeln und/oder ein fließendes Übereinandergehen beider Bewegungen der Schenkel 1 und 2 so bestimmen kann, daß diese optimal auf das abzuisolierende Objekt abgezielt ist.

Ist der jeweilige Absioliervorgang abgeschlossen, sorgt die Feder 7 und der in der Schlitzausnehmung 33 zurücklaufende Stift 29 dafür, daß das Abisoliergerät in seine Arbeitsstellung wieder zurückgeht.

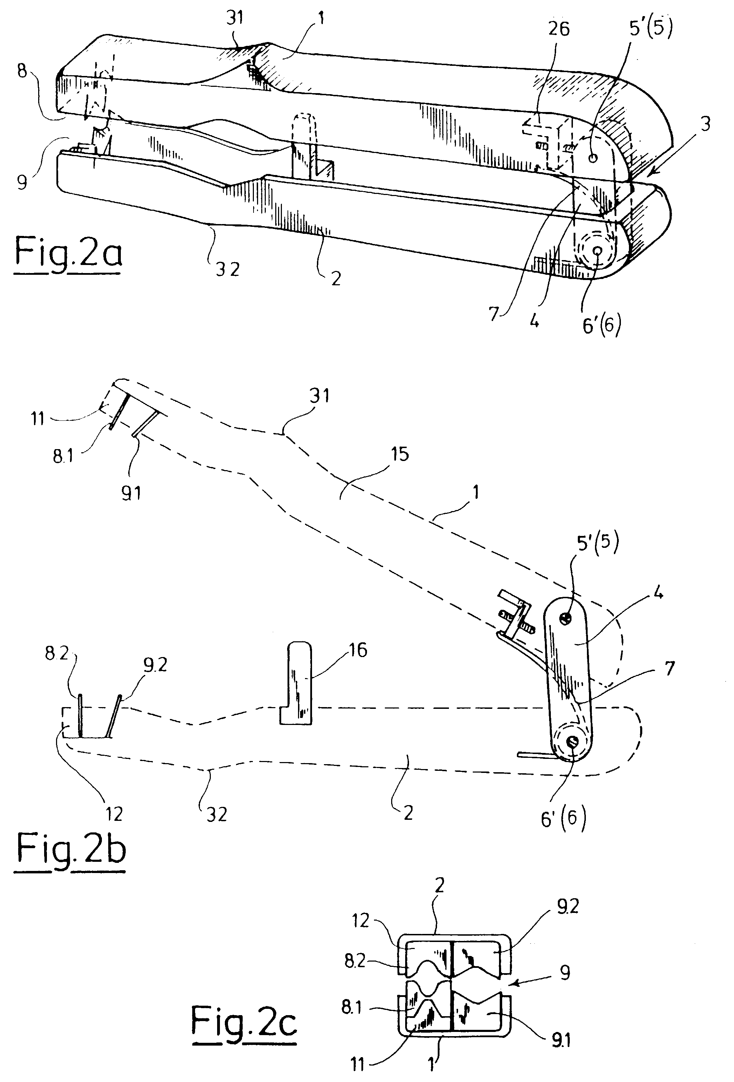

Ein Abisoliergerät für Leiter und Rundleitungen ist in den Figuren 2a bis 2c dargestellt.

Auch dieses Abisoliergerät besteht, wie Figur 2a zeigt, aus zwei Schenkeln 1 und 2, die durch ein Doppelgelenk 3 miteinander verbunden sind. Im Zwischenteil 4, das in den Schenkel 1 und 2 in den Lagern 5 und 6 gehaltert ist, ist eine Feder 7 eingebracht. Damit der obere Schenkel 1 geöffnet bleibt, schlägt er mit einem Anschlag 26, der verstellbar ausgebildet sein kann, an das Zwischenteil 4 an. Das Zwischenteil 4 hat vorzugsweise eine vierkantförmige Gestalt.

Im aufgeklappten Zustand gemäß Figur 2b und in der Figur 2c, die die Arbeitsstellung zeigt, ist zu erkennen, daß im vorderen Bereich der Schenkel 1 und 2 ein Leiterabisolierwerkzeug 8 mit Schneiden 8.1 und 8.2 liegt. Vor der Schneide 8.2 liegt hier eine dreieckige, nach hinten ragende Greiferbacke 12 und vorder Schneide 8.1 die eine kompatible Aufnehmung aufweisende Greiferbacke 11. Daneben ist ein Abmantelungswerkzeug 9 mit seinen Schneiden 9.1 und 9.2 angeordnet.

Wird in das Leiterabisolierwerkzeug 8 ein Leiter geschoben, vollzieht sich wie bereits oben beschrieben, durch eine Andrück- und Schiebebewegung beider Schenkel 1 und 2 ein Druchtrennen und ein anschließendes Abziehen der Isolation vom blanken Leiter bzw. von dem blanken Leitungen. Dabei läuft ein Zapfen 16 in einer im unteren Schenkel 2 angebrachten Nut 15.

Soll der Mantel von einer Leitung abisoliert werden, ist das gesamte Abisoliergerät um 180° zu drehen, so daß, wie die Figur 2c zeigt, der Schenkel 2 oben und der Schenkel 1 unten zu liegen kommt. In das geöffnete Werkzeug 9 wird nun eine Leitung geschoben. Die an den Schenkeln 1 und 2 angeordneten Grifferhebungen 31 und 32, die in diesem Fall etwas versetzt zueinander liegen und das fast gerade stehende Zwischenteil 4 sowie die durch die Drehung um 180° nun vor den Schneiden 9.2 und 8.2 liegenden Schneiden 9.1 und 8.1 bedingt durch die Drehung um 180° lassen nun nur eine Schneidebewegung der beiden Schneiden 9.1 und 9.2 zu, mit denen bei einer Drehung des Abisoliergerätes um den Mantel der Leitung diese fachgerecht durchtrennt und abgezogen werden kann.

Leiter größeren Querschnitts bedürfen für eine Abisolierung einen höheren Kraftaufwand. Eine mögliche Ausführungsform hierfür ist in den Figuren 3a bis 3c dargestellt. Sie besteht, wie Figur 3a zeigt, ebenfalls aus zwei sich gegenüberliegenden Schenkeln 1 und 2, die miteinander durch ein Doppelgelenk 3, das aus einen in Lagern 5 und 6 drehbaren Zwischenteil 4 besteht, verbunden sind. Das Zwischenstück 4 ist dabei länger und schräg stehend in einer pistolengriffähnlichen Verlängerung des unteren Schenkels 2 gelagert.

Am unteren Schenkel 2 ist, wie besonders Figur 3b verdeutlicht, ein Unterteil 34 eines Hebegelenks 17 befestigt. Mit einem Bolzen 37 ist ein Hebelelement 20 an diesem Gelenk 17 angebracht. Das Hebegelenk 20 hakt durch eine im Schenkel 1 eingebrachte Nut 18 nach außen und berührt mit seiner gekrümmten Fläche 21 eine quer in der Nut 18 liegende und in sie eingebrachten Rollenzylinder 22.

Vorn ist das Abisoliergerät, wie Figur 3c auch zeigt, mit einem Abisolierwerkzeug 8 und Greifbacken 11 und 12 ausgestattet. Ebenso wie die Greifbacken 11 und 12 sind auch die Schneiden 8.1 und 8.2 des Werkzeuges 8 dem Querschnitt des abzuisolierenden Leiters entsprechend größer ausgebildet.

In dieses Schneidwerkzeug 8 und die Greifbacken 11 und 12, die ähnlich wie bereits beschrieben ausgebildet sind, wird ein Leiter eingeführt. Durch die Schrägstellung des Zwischenstücks 4 und den vorgeschobenen oberen Schenkel 1 wird bereits bei der Schneidbewegung eine größere Kraft auf die Isolation des Leiters ausgeübt. Diese Kraft wird durch das Nachvorneschieben des Hebelelementes 20 mit dem Daumen noch dadurch verstärkt, weil die gekrümmte Fläche 21 auf dem Rollenzylinder 22 abgleitet. Diese Fläche kann unterschiedlich gekrümmt sein, z. B. am Anfang leicht und über die Mitte zum Ende hin ansteigend oder auch umgekehrt. Durch die Wahl der unterschiedlichen Krümmung 21 kann dadurch die Kraft des Hebelelementes 17 in den verschiedenen Bewegungsphasen unterschiedlich stark geführt und dosiert werden.

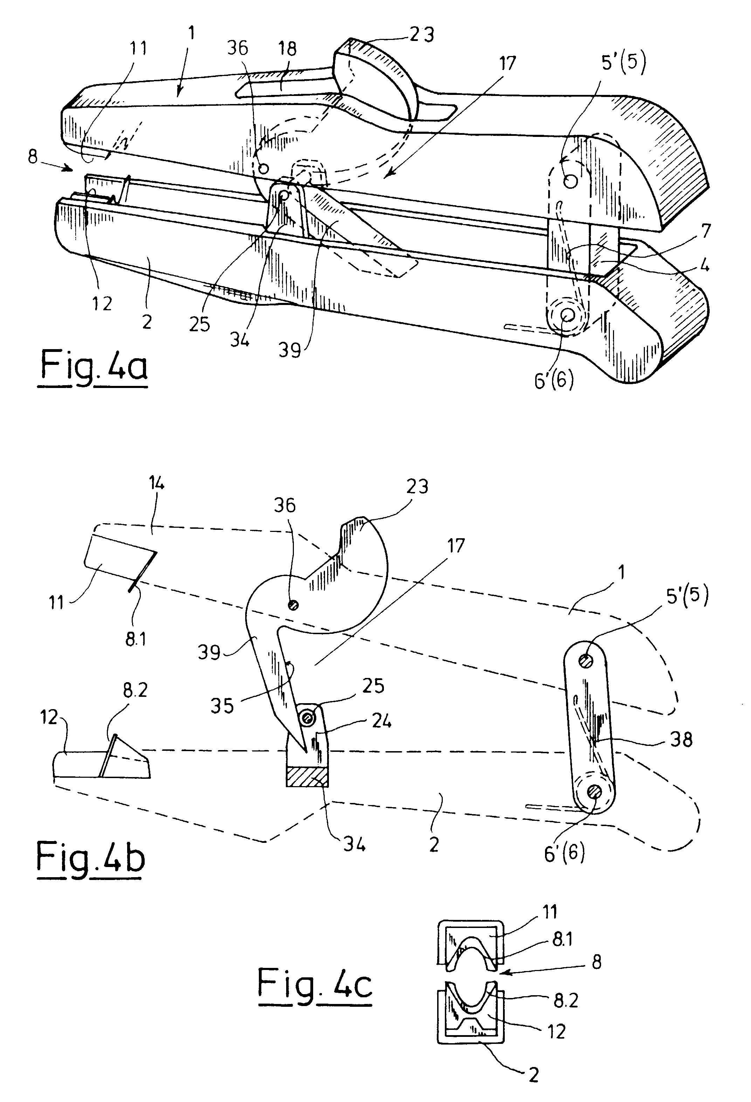

Eine weitere Ausführungsform eines Abisoliergerätes mit einem anderen ausgebildeten Hebelelement 17 zeigen die Figuren 4a bis 4c. Auch hier werden zwei Schenkel 1 und 2 durch ein Doppelgelenk 3, das aus einem in Lagern 5 und 6 drehbaren Zwischenteil 4 besteht, zusammengehalten. Zur Greiferleichterung ist das Unterteil 2 ebenfalls pistolengriffartig verlängert. Im Unterschied zur vorigen Ausführungsform steht das durch eine Feder 7 zurückgeholte Zwischenteil 4 fast im rechten Winkel zum unteren Schenkel 2, schlägt aber gleichfalls an ein als Rückholbegrenzung dienende Rückwand 38 an.

Am unteren Schenkel 2 ist ein Unterteil 34 mit einem Zylinderbolzen 24 angebracht. Der Zylinderbolzen 24 wird durch zwei flach oder ähnlich ausgebildete Teile des Unterteils so gehalten, daß die Rolle 24 von allen Seiten frei zugänglich ist. Im Schenkel 1 befindet sich ein etwa τ-förmiger Hebel 23, der mit einem Bolzen 36 im Schenkel 1 gehalten wird. Der Hebel 23 verfügt, wie besonders aus Figur 4b hervorgeht, über ein gerades Teil 39 mit einer Lauffläche 35. Diese Lauffläche 35 läuft beim Zusammendrücken der Schenkel 1 und 2 und bei Betätigen des Hebels 23 am Zylinderbolzen 25 ab. Die Schenkel 1 und 2 selbst sind mit Schneiden 8.1 und 8.2 sowie Greiferbacken 11 und 12, die bereits oben ausführlich beschrieben sind, ausgerüstet. Die Kraft, die durch die Betätigung des Hebels 23 ausgeübt werden soll, wird durch die Neigung des geraden Teils 39 bestimmt. Differenziert werden kann die Kraft auch noch dadurch, daß die Ablauffläche 35 nicht wie dargestellt, gerade sondern gekrümmt ist, z. B. nach außen und/oder nach innen. Beim Betätigen des Hebels 23 wird dieser nicht allein zur Kraftübertragung, sondern auch zu Führungszwecken benutzt. Dadurch nämlich, daß der Hebel 23 in der Nut 18 und im Unterteil 34 geführt wird, werden auch beide Schenkel sicher bei allen Bewegungen parallel zueinander geführt.

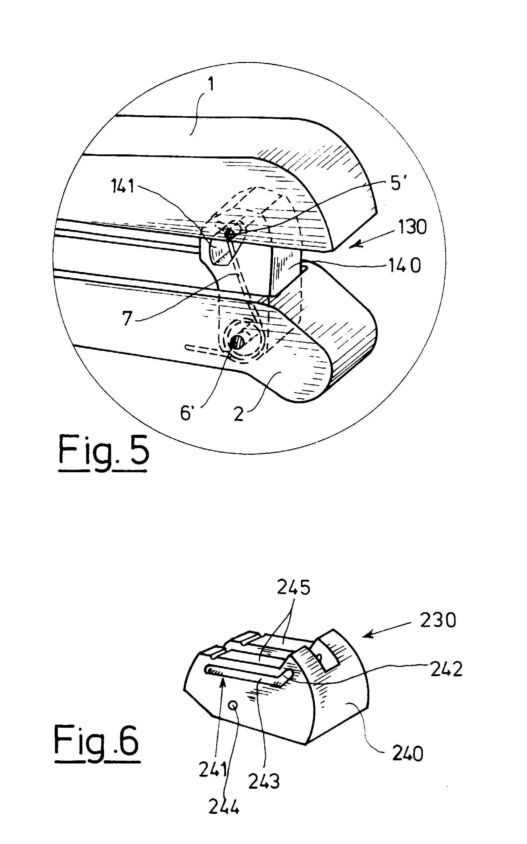

Das Drehschiebegelenk ist, wie Figur 5 zeigt, auch als ein Langloch-Doppelgelenk 130 ausbildbar. Hierbei sind beide Schenkel 1, 2 durch ein Zwischenstück 140 derart verbunden, daß das zylinderförmige Bolzenelement 5', das im Schenkel 1 angeordnet ist, in einem in das Zwischenstück 140 eingebrachten Langloch 141 gleitend und/oder drehbar und das zweite zylinderförmige Bolzenelement 5' im anderen Schenkel 2 und im Zwischenstück 140 drehbar gehalten ist.

Das Zwischenstück 140 ist ebenso wie das Zwischenteil 4 in einem Winkel zwischen 30 und 90° zu einem der Schenkel 1, 2 angeordnet.

Eine weitere Ausbildung des Drehschiebegelenkes in Form eines Langloch-Elementes 230 zeigt Fig. 6. Bei dem Langloch-Element 230 sind beide Schenkel 1, 2 durch ein Zwischensegment 240 derart verbunden, daß das zylinderförmige Bolzenelement 5', der im Schenkel 1 angeordnet ist, in einer vorzugsweise schräg gestellten Gleitausnhemung 241 gleitend und am anderen Schenkel 2 das Zwischensegment 240 starr oder drehbar gehalten ist.
Die in das Zwischensegment 240 eingebrachte Gleitausnehmung 241 besteht aus zwei schräggestellten
Teilschlitzen 242, 243 mit unterschiedlich starkem Gefälle. Das zylinderförmige Bolzenelement 6' hält das Zwischensegment 240 am Schenkel 2 drehbar und/oder mit einer Arretierungsvorrichtung 245 gleitend oder starr.

Um den Bewegungsablauf zu erleichtern, können die zylinderförmigen Bolzenelemente 5', 6' hier, wie auch beim Langloch-Doppelgelenk 130, aus einem gleitenden, aus zwei Teil-Bolzen, einer oder zwei Kugellagerungen oder einem oder mehreren anderen Dreh-Gleit-Verbindungselementen bestehen.

Die Zuordnung der einzelnen speziell ausgebildeten Elemente, die bei den einzelnen Abisoliergeräten beschrieben sind, sind nicht allein auf diese eine Ausführungsform beschränkt. Vielmehr ist es möglich, neue Ausführungsformen des Gegenstandes des Anspruchs 1 durch Variation der einzelnen Elemente zu realisieren.

### Bezugszeichenliste

- 1: Schenkel
- 2: Schenkel
- 3: Doppelgelenk
- 4: Zwischenteil
- 5: Lager
- 5': Bolzenelement
- 6: Lager
- 6': Bolzenelement
- 7: Feder
- 8: Leiterabisolierwerkzeug
- 8.1: Schneide des Leiterabisolierwerkzeugs
- 8.2: Schneide des Leiterabisolierwerkzeugs
- 9: Abmantelungswerkzeug für Rundleiter
- 9.1: Schneide des Abmantelungswerkzeuges für Rundleiter
- 9.2: Schneide des Abmantelungswerkzeuges für Rundleiter
- 10: Abmantelungswerkzeug für Flachleiter bzw. -leitungen
- 10.1: Schneide des Abmantelungswerkzeugs für Flachleiter bzw. -leitungen
- 10.2: Schneide des Abmantelungswerkzeugs für Flachleiter bzw. -leitungen
- 11: Greiferbacke
- 12: Greiferbacke
- 13: hakenförmige Verlängerung
- 14: Messerteil
- 15: Ausnehmung
- 16: Zapfen
- 17: Hebelgelenk
- 18: Nut
- 19: Gelenk
- 20: Hebelelement
- 21: Gekrümmte Fläche
- 22: Rollenzylinder
- 23: Hebel
- 24: Öse
- 25: Zylinderbolzen
- 26: Anschlag
- 27: Ausleger
- 28: Kolbenblock
- 29: Stift
- 30: Schlitz
- 31, 32: Grifferhebung
- 33: Schlitzausnehmung
- 34: Unterteil
- 35: Ablauffläche
- 36: Bolzen
- 37: Bolzen
- 38: Rückwand
- 39: Gerades Teil
- 40: Lager
- 130: Langloch-Doppelgelenk
- 140: Zwischenstück
- 141: Langloch
- 230: Langloch-Element
- 240: Zwischensegment
- 241: Gleitausnehmung
- 242: Teil-Schlitz
- 243: Teil-Schlitz
- 244: Bohrung
- 245: Ausbohrung

## Patentansprüche

1. Vorrichtung zur Abisolierung elektrischer Leiter und/oder Leitungen, bestehend aus wenigstens zwei als Abisoliergerät ausgebildeten Schenkeln (1, 2),
- die an ihrem einen Ende wenigstens eine Drehachse (5', 6') aufweisen, um welche die Schenkel (1, 2) zum Schließen schwenkbar sind, und
- die wenigstens im Bereich ihrer anderen Enden wenigstens ein Schneidwerkzeugteil (8.1, 8.2; 9.1, 9.2; 10.1, 10.2; 14) aufweisen,
dadurch gekennzeichnet, daß
- die Drehachse eine Doppeldrehachse ist, deren erstes im wesentlichen zylinderförmig ausgebildetes Bolzenelement (5') im ersten Schenkel (1) und deren zweites im wesentlichen zylinderförmig ausgebildetes Bolzenelement (6') im zweiten Schenkel (2) angeordnet ist, und
- beide Bolzenelemente (5', 6') in einem Zwischenelement (4; 140; 240) gehalten und geführt sind, wodurch mit einem derart ausgebildeten Drehschiebegelenk (3; 130; 230) beide Schenkel (1, 2) mit ihren Schneidwerkzeugteilen (8.1, 8.2; 9.1, 9.2; 10.1, 10.2; 14) pinzettenartig gehalten und bei Betätigen mit an ihnen angeordneten Führungselementen (15, 16; 17, 18) aufeinander preß- und in eine Richtung gegeneinander verschiebbar sind.

2. Vorrichtung nach Anspruch 1, dadurch gekennzeichnet, daß gegenüber dem Drehschiebegelenk (3; 130; 230) außer den Schneidwerkzeugen (8.1, 8.2; 9.1, 9.2) eines bekannten Leiterabisolierwerkzeuges (8) und/oder eines bekannten Abmantelungswerkzeuges für Rundleitungen (9) ∟-förmig ausgebildete in Schenkelrichtung und um 180° gegeneinander versetzt angeordnete Schneidwerkzeuge (10.1, 10.2) eines Abisolierwerkzeuges für Flachleiter bzw. -leitungen und/ oder Greiferbacken (11, 12) an den Innenseiten der Schenkel (1, 2) anbringbar sind.

3. Vorrichtung nach Anspruch 1 oder 2, dadurch gekennzeichnet, daß an einem der Schenkel (1) eine hakenförmige Verlängerung (13) angeordnet ist, von der mit der Verschieberichtung beider Schenkel (1, 2) das als ein Messerteil (14) ausgebildete Schneidwerkzeug weg- und wieder heranführbar ist.

4. Vorrichtung nach wenigstens einem der Ansprüche 1 bis 3, dadurch gekennzeichnet, daß das Drehschiebegelenk (3; 130; 230) mit einem Rückholelement, z.B. einer Feder (7) und mit einem Rückholbegrenzungselement (29, 33; 26; 38), die an wenigstens einem der Schenkel angeordnet sind, versehen ist.

5. Vorrichtung nach wenigstens einem der Ansprüche 1 bis 4, dadurch gekennzeichnet, daß das Drehschiebegelenk als ein Doppelgelenk (3) ausgebildet ist, bei dem beide Schenkel (1, 2) miteinander durch ein Zwischenteil (4) verbunden sind, das in jedem der Schenkel über zylinderförmige Bolzenelemente (5', 6') drehbar gelagert ist.

6. Vorrichtung nach wenigstens einem der Ansprüche 1 bis 4, dadurch gekennzeichnet, daß das Drehschiebegelenk als ein Langloch-Doppelgelenk (130) ausgebildet ist, bei dem beide Schenkel (1, 2) durch ein Zwischenstück (140) derart verbunden sind, daß das erste zylinderförmige Bolzenelement (5'), das in einem der Schenkel (1) angeordnet ist, in einem in das Zwischenstück (140) eingebrachten Langloch (141) gleitend und/oder drehbar und das zweite zylinderförmige Bolzenelement (5') im anderen Schenkel (2) und im Zwischenstück (140) drehbar gehalten ist.

7. Vorrichtung nach wenigstens einem der Ansprüche 1 bis 4, dadurch gekennzeichnet, daß das Drehschiebegelenk als ein Langloch-Element (230) ausgebildet ist, bei dem beide Schenkel (1, 2) durch ein Zwischensegment (240) derart verbunden sind, daß das erste zylinderförmige Bolzenelement (5'), der in einem der Schenkel (1) angeordnet ist, in einer vorzugsweise schräg gestellten Gleitausnehmung (241) gleitend und am anderen Schenkel (2) das Zwischensegment (240) starr oder drehbar gehalten ist.

8. Vorrichtung nach Anspruch 7, dadurch gekennzeichnet,
- daß die in das Zwischensegment (240) eingebrachte Gleitausnehmung (241) aus zwei schräggestellten Teilschlitzen (242, 243) mit unterschiedlich starkem Gefälle besteht und/oder
- daß das zweite zylinderförmige Bolzenelement (6') das Zwischensegment (240) am anderen Schenkel (2) drehbar und/oder mit einer Arretierungsvorrichtung (245) gleitend oder starr gehalten ist.

9. Vorrichtung nach einem der Ansprüche 1 bis 8, dadurch gekennzeichnet, daß die zylinderförmigen Bolzenelemente (5', 6') aus einem gleitenden, aus zwei Teil-Bolzen, einer oder zwei Kugellagerungen oder einem oder mehreren anderen Dreh-Gleit-Verbindungselementen bestehen.

10. Vorrichtung nach wenigstens einem der Ansprüche 1 bis 9, dadurch gekennzeichnet, daß das Führungselement (16; 17) zugleich ein Anschlagelement für die in das Leiterabisolierwerkzeug (8) und die Greiferbacken (11, 12) einzuführende Leitung ist.

11. Vorrichtung nach wenigstens einem der Ansprüche 1 bis 10, dadurch gekennzeichnet, daß das Führungselement als wenigstens ein in wenigstens einer länglichen Ausnehmung (15) verschiebbarer Zapfen (16) ist, der in der Innenseite einer der Schenkel (2) ein- oder angebracht, ausgebildet ist.

12. Vorrichtung nach wenigstens einem der Ansprüche 1 bis 11, dadurch gekennzeichnet, daß das Führungselement als ein Hebelgelenk (17), das gelenkig mit einem der Schenkel (1, 2) verbunden und in einer Nut (18) des anderen geführt ist, ausgebildet ist.

13. Vorrichtung nach wenigstens einem der Ansprüche 1 bis 12, dadurch gekennzeichnet, daß ein über einem Gelenk (19) des Hebegelenks (17) angeordneter Hebel (20) eine gekrümmte Fläche (21) aufweist, die bei der Verschiebungsbewegung beider Schenkel (1, 2) mit einem in der Nut (18) angeordneten Rollenzylinder (22) kraftschlüssig in Verbindung kommt.

14. Vorrichtung nach wenigstens einem der Ansprüche 1 bis 13, dadurch gekennzeichnet, daß ein in der Nut (18) gehaltenes, im wesentlichen τ-förmig ausgebildeter Hebel (23) mit seinem im wesentlichen geraden Teil (39) unter einen in einer Öse (24) drehbar gelagerten Zylinderbolzen (25) kraftschlüssig eingreift, wobei der Hebel (23) und die Öse (24) in einem der Schenkel (1, 2) angeordnet ist.

15. Vorrichtung nach wenigstens einem der Ansprüche 1 bis 12, dadurch gekennzeichnet, daß das Zwischenteil (4) und das Zwischenstück (140) in einem Winkel zwischen 30 und 90° zu einem der Schenkel (1, 2) angeordnet ist.

16. Vorrichtung nach wenigstens einem der Ansprüche 1 bis 15, dadurch gekennzeichnet, daß das Rückholbegrenzungselement als ein in Schlitzausnehmungen (33) eines der Schenkel (1, 2) laufender Zylinderbolzen (29) ist, der von einem Ausleger (27) gehalten ist, der in der Nähe einer der Lagerpunkte (5, 6) angeordnet ist,
als eine feststehende Rückwand (38) in einem der Lagerpunkte (5, 6) der Schenkel (1, 2) und/oder als ein in einem der Schenkel (1, 2) angeordneter verstellbarer Anschlag (26) ausgebildet ist.

17. Vorrichtung nach wenigstens einem der Ansprüche 1 bis 16, dadurch gekennzeichnet, daß das Messerteil (14) an einem Kolbenblock (28) angeordnet ist, der mit einem Ausleger (27) verbunden ist und der durch einen Stift (6') eines der Lager (6) in einem Schlitz (30) des Kolbenblocks (28) geführt ist.

18. Vorrichtung nach wenigstens einem der Ansprüche 1 bis 17, dadurch gekennzeichnet, daß wenigstens einer der Schenkel (1, 2) an seiner Außenseite eine Grifferhebung (31, 32) aufweist, die einander gegenüber oder versetzt zueinander liegen.

## Claims

1. Device for stripping the insulation from electrical conductors and/or wires, consisting of at least two legs (1, 2) designed as a stripping device,
- which legs have at one end at least one swivel pin (5', 6'), about which the legs (1, 2) can pivot for closing, and
- which have, at least in the area of their other ends, at least one cutting tool element (8.1, 8.2; 9.1, 9.2; 10.1, 10.2; 14),
characterised in that
- the swivel pin is a double swivel pin, whose first substantially cylindrical pivot (5') is disposed in the first leg (1) and whose second substantially cylindrical pivot (6') is disposed in the second leg (2), and
- both pivots (5', 6') are held and guided in an intermediate element (4; 140; 240), so that with a swivelling/sliding joint thus produced (3; 130; 230) both legs (1, 2) with their cutting tool parts (8.1, 8.2; 9.1, 9.2; 10.1, 10.2; 14) are held as forceps and can be pressed against each other and slid in contrary motion to each other when the guide elements (15, 16; 17, 18) disposed on them are actuated.

2. Device according to claim 1, characterised in that remote from the swivelling/sliding joint (3; 130; 230), in addition to the cutting tools (8.1, 8.2; 9.1, 9.2) of a known insulation stripping tool (8) and/or of a known sheathing stripping tool for round conductors (9), cutting tools (10.1, 10.2) of an insulation stripping tool for flat conductors and wires and/or gripper jaws (11, 12) can be mounted on the insides of the legs (1, 2), which cutting tools (10.1, 10.2) are L-shaped and are offset from each other by 180° in the direction of the legs.

3. Device according to claim 1 or 2, characterised in that on one of the legs (1) a hooked extension (13) is disposed, whose cutting tool, designed as a blade element (14), can be guided forwards and backwards with the direction of displacement of the two legs (1, 2).

4. Device according to at least one of claims 1 to 3, characterised in that the swivelling/sliding joint (3; 130; 230) is provided with a return element, e.g. a spring (7) and a return-limiting element (29, 33; 26; 38) disposed on at least one of the legs.

5. Device according to at least one of claims 1 to 4, characterised in that the swivelling/sliding joint is designed as a double joint (3), wherein the two legs (1, 2) are connected to each other by an intermediate element (4) which is rotationally mounted in each of the legs via cylindrical pivots (5', 6').

6. Device according to at least one of claims 1 to 4, characterised in that the swivelling/sliding joint is designed as a slotted double joint (130), wherein the two legs (1, 2) are so connected by an intermediate element (140) that the first cylindrical pivot (5') disposed in one of the legs (1) is slidable and/or rotatable in a slot (141) in the intermediate element (140), and the second cylindrical pivot (5) is rotationally held in the other leg (2) and in the intermediate element (140).

7. Device according to at least one of claims 1 to 4, characterised in that the swivelling/sliding joint is designed as a slotted element (230), wherein the two legs (1, 2) are so connected by an intermediate segment (240) that the first cylindrical pivot (5') disposed in one of the legs (1) slides in a preferably obliquely positioned sliding recess (241), and the intermediate segment (240) is held rigidly or rotationally on the other leg (2).

8. Device according to claim 7, characterised in that
- the sliding recess (240) made in the intermediate segment (240) consists of two obliquely positioned slot portions (242, 243) with differentially steep slopes and/or
- the intermediate segment (240) is held rotationally by the second cylindrical pivot (6') on the other leg (2) and/or is fixed or slides with a locking device (245).

9. Device according to one of claims 1 to 8, characterised in that the cylindrical pivots (5', 6') consist of one sliding pivot, of two partial pivots, of one or two ball-bearings or of one or more other swivel-and-slide connecting elements.

10. Device according to at least one of claims 1 to 9, characterised in that the guide element (16; 17) is at the same time a stop element for the conductor to be inserted into the stripping tool (8) and the gripper jaws (11, 12).

11. Device according to at least one of claims 1 to 10, characterised in that the guide element is designed as at least one peg (16) slidable in at least one elongate recess (15), which peg is inserted in or fitted on the inside of one of the legs (2).

12. Device according to at least one of claims 1 to 11, characterised in that the guide element is designed as a lever joint (17), which is pivotally connected to one of the legs (1, 2) and is guided in a slot (18) in the other leg.

13. Device according to at least one of claims 1 to 12, characterised in that a lever (20), disposed on a pivot (19) of the lever joint (17), has a curved surface (21) which comes into non-positive contact with a cylindrical roller (22) in the slot (18) during the sliding movement of the two legs (1, 2).

14. Device according to at least one of claims 1 to 13, characterised in that an essentially τ-shaped lever (23), held in the slot (18), engages non-positively from below, by its substantially straight portion (39), a cylindrical pivot (25) rotationally mounted in a socket (24), the lever (23) and the socket (24) being disposed in one of the legs (1, 2).

15. Device according to at least one of claims 1 to 12, characterised in that the intermediate part (4) and the intermediate element (140) are disposed at an angle of between 30° and 90° to one of the legs (1, 2).

16. Device according to at least one of claims 1 to 15, characterised in that the return-limiting element is a cylindrical pivot (29) running in slot recesses (33) in one of the legs (1, 2), and is held by an arm (27) disposed in the vicinity of one of the pivot points (5, 6), or as a fixed back wall (38) in one of the pivot points (5, 6) of the legs (1, 2), and/or as an adjustable stop (26) disposed in one of the legs (1, 2).

17. Device according to at least one of claims 1 to 16, characterised in that the blade element (14) is disposed on a butt block (28) which is connected to an arm (27) and which is guided by a pin (6') of one of the pivot mountings (6) in a slot (30) in the butt block (28).

18. Device according to at least one of claims 1 to 17, characterised in that at least one of the legs (1, 2) has on its outside a raised grip (31, 32), lying opposite each other or offset with respect to each other.

## Revendications

1. Dispositif de dénudation de conducteurs et/ou de fils électriques, se composant d'au moins deux branches (1, 2) qui forment un dispositif de dénudation,
qui comportent à leur première extrémité au moins un axe de rotation (5', 6') autour duquel les branches (1, 2) peuvent pivoter pour la fermeture, et
qui comportent au moins dans la zone de leurs autres extrémités au moins une partie d'outil de coupe (8.1, 8.2; 9.1, 9.2; 10.1, 10.2; 14),
caractérisé en ce que
l'axe de rotation est un axe de rotation double dont le premier élément de goujon (5') de forme sensiblement cylindrique est disposé dans la première branche (1) et dont le deuxième élément de goujon (6') de forme sensiblement cylindrique est agencé dans la deuxième branche (2), et
les deux éléments de goujons (5', 6') sont maintenus et guidés dans un élément intermédiaire (4, 140; 240) de sorte que, sous l'effet d'une articulation à rotation et à coulissement configurée de cette manière (3; 130; 230), les deux branches (1, 2) sont maintenues en agençant comme des brucelles leurs parties (8.1, 8.2; 9.1, 9.2; 10.1, 10.2; 14) d'outils de coupe, et que ces branches peuvent lors d'un actionnement être appuyées l'une contre l'autre et coulisser dans une certaine direction l'une par rapport à l'autre avec des éléments de guidage qui y sont agencés (15, 16; 17, 18).

2. Dispositif selon la revendication 1, caractérisé en ce que des outils de coupe (10.1, 10.2) d'un outil de dénudation pour conducteurs ou fils plats, outils qui sont agencés selon une configuration en L dans la direction des branches et décalés de 180° l'un par rapport à l'autre, et/ou des mâchoires de griffes (11, 12) peuvent être montés sur les côtés intérieurs des branches (1, 2) face à l'articulation à rotation et à coulissement (3; 130; 230), en plus des outils de coupe (8.1, 8.2; 9.1, 9.2) d'un outil connu (8) de dénudation de conducteur et/ou d'un outil de dénudation pour fils ronds (9).

3. Dispositif selon la revendication 1 ou 2, caractérisé en ce qu'un prolongement (13) en forme de crochet, dont l'outil de coupe réalisé sous forme de partie de couteau (14) peut être éloigné ou rapproché en va-et-vient dans la direction de coulissement des deux branches (1, 2), est agencé sur l'une des branches (1).

4. Dispositif selon l'une au moins des revendications 1 à 3, caractérisé en ce que l'articulation à rotation et à coulissement (3; 130; 230) est pourvue d'un élément de rappel, par exemple un ressort (7), et d'un élément de limitation (29, 33; 26; 38) de rappel qui sont agencés au moins sur l'une des branches.

5. Dispositif selon l'une des au moins revendications 1 à 4, caractérisé en ce que l'articulation à rotation et à coulissement est réalisée sous forme d'une articulation double (3) dans laquelle les deux branches (1, 2) sont assemblées entre elles par un élément intermédiaire (4), qui est logé à rotation dans chacune des branches au moyen d'éléments de goujons cylindriques (5', 6').

6. Dispositif selon l'une au moins des revendications 1 à 4, caractérisé en ce que l'articulation à rotation et à coulissement est réalisée sous forme d'une articulation double (130) à orifice allongé dans laquelle les deux branches (1, 2) sont assemblées par une pièce intermédiaire (140) d'une manière telle que le premier élément de goujon cylindrique (5') qui est agencé dans l'une des branches (1) est maintenu à coulissement et/ou à rotation dans un orifice allongé (140) ménagé dans la pièce intermédiaire (140), et le deuxième élément de goujon cylindrique (6') est maintenu à rotation dans l'autre branche (2) et dans la pièce intermédiaire (140).

7. Dispositif selon l'une au moins des revendications 1 à 4, caractérisé en ce que l'articulation à rotation et à coulissement est réalisée sous forme d'un élément (230) à orifice allongé dans lequel les deux branches (1, 2) sont assemblées par un segment intermédiaire (240) d'une manière telle que le premier élément de goujon cylindrique (5') qui est agencé dans l'une des branches (1) est maintenu à coulissement dans un évidement de coulissement (241) disposé de préférence en oblique, et le segment intermédiaire (240) est maintenu fixe ou à rotation sur l'autre branche (2).

8. Dispositif selon la revendication 7, caractérisé
en ce que l'évidement de coulissement (241) ménagé dans le segment intermédiaire (240) se compose de deux fentes partielles (242, 243) disposées en oblique, dont les pentes sont inégales et/ou
en ce que le deuxième élément de goujon cylindrique (6') maintient l'élément intermédiaire (240) sur l'autre branche (2) à rotation et/ou à coulissement ou de façon fixe avec un dispositif de blocage (245).

9. Dispositif selon l'une des revendications 1 à 8, caractérisé en ce que les éléments de goujons cylindriques (5', 6') se composent d'un goujon partiel coulissant, de deux goujons partiels, d'un ou deux roulements à billes ou d'un ou plusieurs autres éléments d'assemblage à rotation et à coulissement.

10. Dispositif selon l'une au moins des revendications 1 à 9, caractérisé en ce que l'élément de guidage (16; 17) est en même temps un élément de butée pour le fil à introduire dans l'outil de dénudation (8) de conducteurs et les mâchoires de griffes (11, 12).

11. Dispositif selon l'une au moins des revendications 1 à 10, caractérisé en ce que l'élément de guidage est réalisé sous forme d'au moins un tenon (16) qui coulisse dans au moins un évidement allongé (15) et qui est formé ou monté dans le côté intérieur de l'une des branches (2).

12. Dispositif selon l'une au moins des revendications 1 à 11, caractérisé en ce que l'élément de guidage est réalisé sous forme d'une articulation (17) à levier qui est assemblée de façon articulée à l'une des branches (1, 2) et qui est guidée dans une encoche (18) de l'autre.

13. Dispositif selon l'une au moins des revendications 1 à 12, caractérisé en ce qu'un levier (20) agencé au-dessus d'une articulation (19) de l'articulation (17) à levier comporte une surface incurvée (21) qui vient s'assembler par effet de force avec un rouleau cylindrique (22) agencé dans l'encoche (18), lors du déplacement des deux branches (1, 2) à coulissement.

14. Dispositif selon l'une au moins des revendications 1 à 13, caractérisé en ce qu'un levier (23) réalisé sensiblement en forme de τ maintenu dans l'encoche (18) pénètre par effet de force, par sa partie sensiblement droite (39), au-dessous d'un goujon (25) de cylindre logé à rotation dans un oeillet (24), le levier (23) et l'oeillet (24) étant agencés dans l'une des branches (1, 2).

15. Dispositif selon l'une au moins des revendications 1 à 12, caractérisé en ce que l'élément intermédiaire (4) et la pièce intermédiaire (140) sont agencés selon un angle compris entre 30 et 90° par rapport à l'une des branches (1, 2).

16. Dispositif selon l'une au moins des revendications 1 à 15, caractérisé en ce que l'élément de limitation de rappel est en forme de goujon cylindrique (29) qui se déplace dans des évidements (33) en forme de fentes ménagés dans l'une des branches (1, 2) et est maintenu par une console (27) qui est agencée au voisinage de l'un des points de palier (5, 6), en forme de paroi arrière fixe (38) dans l'un des points de palier (5, 6) des branches et/ou en forme de butée réglable (26) agencée dans l'une des branches (1, 2).

17. Dispositif selon l'une au moins des revendications 1 à 16, caractérisé en ce que la partie de couteau (14) est agencée sur un bloc (28) de piston qui est assemblé à une console (27) et qui est guidé par une tige (6') de l'un des paliers (6) dans une fente (30) du bloc (28) de piston.

18. Dispositif selon l'une au moins des revendications 1 à 17, caractérisé en ce qu'au moins l'une des branches (1, 2) présente sur son côté extérieur une surélévation (31, 32) de saisie, qui sont situées face à face ou décalées l'une par rapport à l'autre.
